# EUROPÄISCHE PATENTSCHRIFT

(11) **EP 2 072 988 B1**
(45) Veröffentlichungstag und Bekanntmachung des Hinweises auf die Patenterteilung: **26.01.2011**
(21) Anmeldenummer: 07024587.3
(22) Anmeldetag: 19.12.2007
(51) Int. Cl.: G01M 3/28, F16L 11/118

(54) **Prüfverfahren und -vorrichtung**
Test method and device
Procédé et dispositif de vérification

(43) Veröffentlichungstag der Anmeldung: 24.06.2009
(73) Patentinhaber: Hegler, Ralph-Peter, Dr.-Ing., 97688 Bad Kissingen (DE)
(72) Erfinder: Hegler, Ralph-Peter, Dr.-Ing., 97688 Bad Kissingen (DE)
(74) Vertreter: Rau, Albrecht

(56) Entgegenhaltungen:
- CH-A5- 652 502
- US-A1- 2005 166 666

## Beschreibung

Die Erfindung betrifft ein Verfahren sowie eine Vorrichtung zur Erzeugung auf Dichtheit geprüfter Verbund-Rohre.

Aus der CH 652 502 A5 ist ein Verfahren sowie eine Vorrichtung zum Prüfen der Dichtigheit von Leitungen bekannt.

Im Bereich der Lüftungstechnik werden zunehmend Verbund-Rohre eingesetzt. Ein wichtiger Qualitätsaspekt ist dabei eine intakte Innenoberfläche der Verbund-Rohre ohne Löcher oder ähnliche Defekte. Diese würden zu störenden Geräuschentwicklungen führen. Das Kontrollieren der Innenoberfläche mit Kameras ist insbesondere bei aufgewickelten flexiblen Verbundrohren außerordentlich aufwändig und darüber hinaus auf kurze Verbund-Rohr-Längen beschränkt.

Der Erfindung liegt die Aufgabe zugrunde, ein einfaches Verfahren und eine entsprechende Vorrichtung zur Erzeugung auf Dichtheit geprüfter Verbund-Rohre zu schaffen.

Die Aufgabe wird durch die Merkmale der unabhängigen Ansprüche 1 und 5 gelöst. Der Kern der Erfindung besteht darin, bei einem Verbund-Rohr, das einen durchlaufenden Innen-Kanal zwischen dem glattwandigen Innen-Rohr und dem gewellten Außen-Rohr besitzt, eine Druckdifferenz zwischen dem Innen-Kanal und der Umgebung zu erzeugen. Ist das zu prüfende Verbund-Rohr dicht, so stellt sich bezüglich der Druckdifferenz ein Soll-Wert ein, d.h. es lässt sich im Innen-Kanal beispielsweise ein stabiler Unterdruck erzeugen. Weist das Innen-Rohr Defekte auf, so tritt Luft an dieser Stelle in den Innen-Kanal und der Druckdifferenz-Soll-Wert lässt sich nicht einstellen.

Weitere vorteilhafte Ausgestaltungen der Erfindung ergeben sich aus den Unteransprüchen.

Zusätzliche Merkmale und Einzelheiten der Erfindung ergeben sich aus der Beschreibung mehrerer Ausführungsbeispiele anhand der Zeichnung. Es zeigen
- Fig. 1: eine Vorrichtung zur Erzeugung auf Dichtheit geprüfter Ver- bund-Rohre,
- Fig. 2: ein zu prüfendes Verbund-Rohr für die Vorrichtung gemäß Fig. 1,
- Fig. 3: einen Schnitt gemäß der Schnittlinie III-III in Fig. 2,
- Fig. 4: einen Schnitt gemäß der Schnittlinie IV-IV in Fig. 3,
- Fig. 5: einen Schnitt gemäß der Schnittlinie V-V in Fig. 3,
- Fig. 6: ein zu prüfendes Verbund-Rohr gemäß einem zweiten Aus- führungsbeispiel,
- Fig. 7: einen Schnitt gemäß der Schnittlinie VII-VII in Fig. 6,
- Fig. 8: einen Schnitt gemäß der Schnittlinie VIII-VIII in Fig. 7,
- Fig. 9: ein zu prüfendes Verbund-Rohr gemäß einem dritten Ausfüh- rungsbeispiel,
- Fig. 10: einen Schnitt gemäß der Schnittlinie X-X in Fig. 9,
- Fig. 11: ein zu prüfendes Verbund-Rohr gemäß einem vierten Ausfüh- rungsbeispiel,
- Fig. 12: einen Schnitt gemäß der Schnittlinie XII-XII in Fig. 11,
- Fig. 13: einen Schnitt gemäß der Schnittlinie XIII-XIII in Fig. 12,
- Fig. 14: einen Schnitt gemäß der Schnittlinie XIV-XIV in Fig. 12,
- Fig. 15: ein zu prüfendes Verbund-Rohr gemäß einem fünften Aus- führungsbeispiel,
- Fig. 16: einen Schnitt gemäß der Schnittlinie XVI-XVI in Fig. 15,
- Fig. 17: einen Schnitt gemäß der Schnittlinie XVII-XVII in Fig. 16,
- Fig. 18: ein zu prüfendes Verbund-Rohr gemäß einem sechsten Aus- führungsbeispiel und
- Fig. 19: einen Schnitt gemäß der Schnittlinie XIX-XIX in Fig. 18.

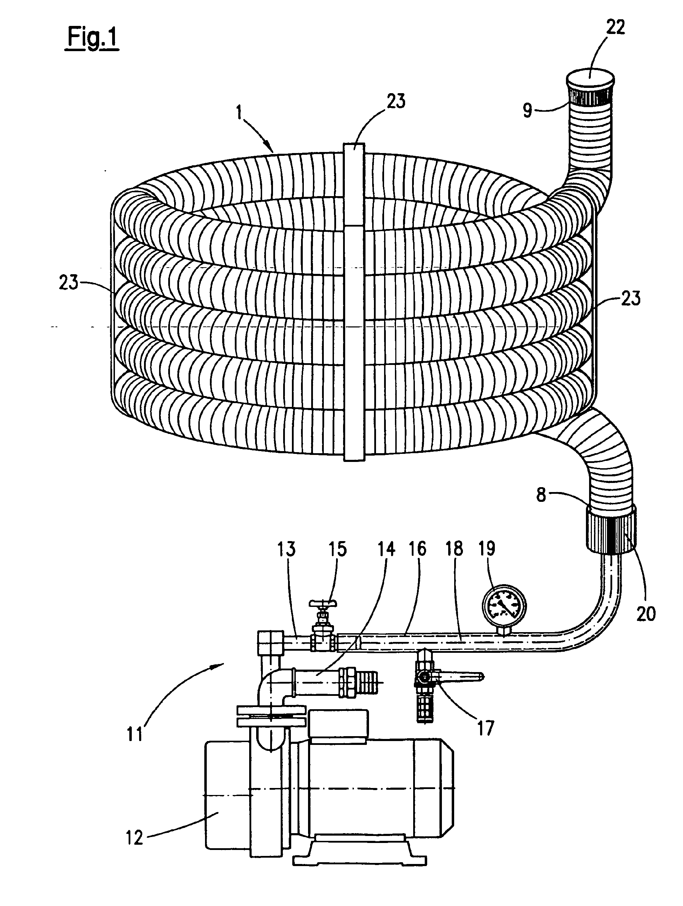

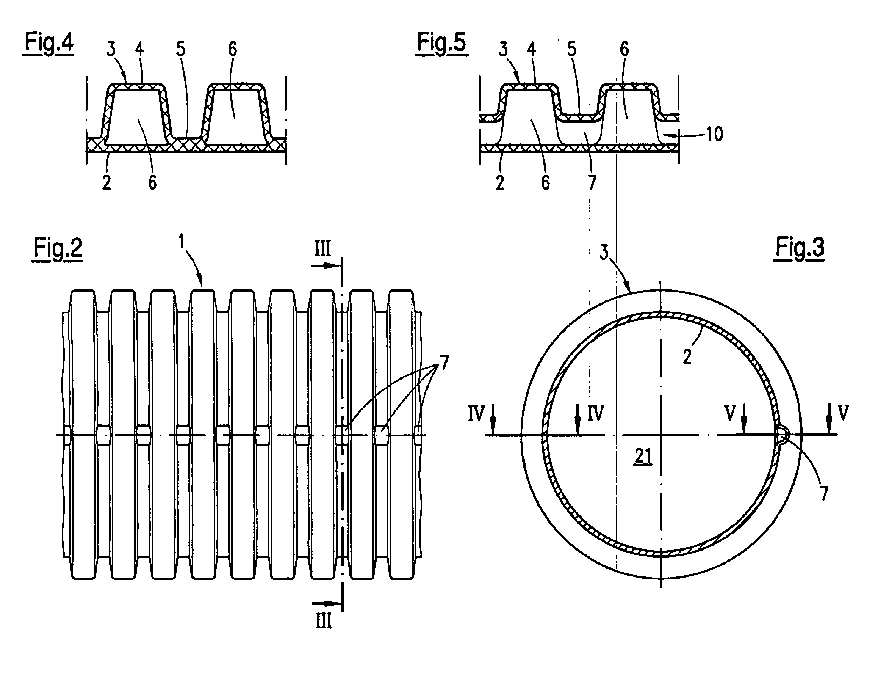

Im Folgenden wird unter Bezugnahme auf die Fig. 1 bis 5 ein erstes Ausführungsbeispiel der Erfindung beschrieben. Vorrichtungen zur Herstellung von doppelwandigen Verbund-Rohren 1 aus thermoplastischem Kunststoff sind beispielsweise aus der EP 509 216 A2 (entsprechend US-Patent 5,346,384) und der EP 563 575 A2 (entsprechend US-Patent 5,320,797) bekannt. Verbund-Rohre 1 weisen ein glattwandiges, kreiszylindrisches Innen-Rohr 2 sowie ein dieses umgebendes, konzentrisches, gewelltes Außen-Rohr 3 auf. Das Außen-Rohr 3 besteht aus ringzylindrischen Wellenbergen 4 und dazwischen liegenden Wellentälern 5, wobei die Wellentäler mit dem Innen-Rohr 2 verschweißt sind. Der Begriff "Ringzylinder" bzw. das abgeleitete Adjektiv "ringzylindrisch" werden auf einen Körper bezogen verstanden, der durch Parallelverschiebung eines geschlossenen Rings mit beliebiger Kontur entsteht. Die ringzylindrischen Wellenberge 4 können somit beispielsweise einen kreisförmigen, ovalen oder elliptischen Querschnitt besitzen. Zwischen jedem Wellenberg 4 und dem Innen-Rohr 2 sind Ring-Räume 6 gebildet. Jeweils unmittelbar benachbarte Ring-Räume 6 sind durch einen Verbindungs-Kanal 7 miteinander verbunden. Im Bereich des Verbindungs-Kanals 7 ist das Wellental 5 entlang eines kurzen Abschnitts nicht mit dem Innen-Rohr 2 verschweißt. Bei dem Verbund-Rohr 1 fluchten die Verbindungs-Kanäle 7 miteinander, d.h. sie befinden sich auf derselben angularen Position. Der sich von einem Ende 8 bis zum anderen Ende 9 des Verbund-Rohres 1 erstreckende, durchgehend verlaufende Raum zwischen dem Innen-Rohr 2 und dem Außen-Rohr 3 bestehend aus sich abwechselnden Ring-Räumen 6 und Verbindungs-Kanälen 7 wird als Innen-Kanal 10 bezeichnet.

Eine Vorrichtung 11 zur Erzeugung auf Dichtheit geprüfter Verbund-Rohre 1 weist eine als Vakuum-Pumpe 12 ausgebildete Druck-/Unterdruck-Erzeugungs-Einrichtung auf. Es ist auch möglich, eine Überdruck erzeugende Pumpe zu verwenden. Die Pumpe 12 weist einen Einlass-Stutzen 13 sowie einen Auslass-Stutzen 14 auf. Der Auslass-Stutzen 14 ist gegenüber der Umgebung offen. Der Einlass-Stutzen 13 ist mit einem Schieber 15 zum Verschließen des Einlass-Stutzens 13 versehen. An dem Einlass-Stutzen 13 ist eine Leitung 16 angebracht, die als festes Rohr oder als Schlauch ausgebildet sein kann. An der Leitung 16 ist ein Be-/Entlüftungs-Schieber 17 angebracht, der es ermöglicht, den Innenraum 18 der Leitung 16 mit der Umgebung zu verbinden. Dem Schieber 17 nachgeordnet ist an der Leitung 16 eine Druck-Mess-Einrichtung in Form eines Manometers 19 zur Messung des Drucks im Innenraum 18 vorgesehen. Am Ende der Leitung 16 weist diese eine Muffe 20 auf, die auf das Ende 8 des Verbund-Rohres 1 gesteckt ist. Die Muffe 20 ist innen derart ausgebildet, dass der Innenraum 18 der Leitung 16 mit dem Innen-Kanal 10, nicht jedoch mit dem Verbund-Rohr-Innenraum 21 verbunden ist. Die kann durch konzentrische Dichtringe erreicht werden, die das Verbund-Rohr 1 im Bereich eines Wellentals 5 von innen und außen umgreifen. Am anderen Ende 9 des Verbund-Rohres 1 ist der Innen-Kanal 10 durch einen Stopfen 22 verschlossen, der ähnlich aufgebaut sein kann wie die Muffe 20. Es ist auch möglich, das Verbund-Rohr 1 im Bereich des Endes 9 in einem Wellental 5 abzuschneiden und den dort befindlichen Verbindungs-Kanal 7 zuzuschweißen. Das Verbund-Rohr 1 kann, wie in Fig. 1 dargestellt, in aufgerollter Form vorliegen und durch Abbindebänder 23 zusammengehalten sein.

Im Folgenden wird das Verfahren zur Prüfung der Dichtheit des Verbund-Rohres 1 beschrieben. Durch die Pumpe 12 wird bei geöffnetem Schieber 15 und geschlossenem Entlüftungs-Schieber 17 ein Unterdruck auf den Innen-Kanal 10 gegeben, d.h. die Luft wird aus diesem abgesaugt. Das Ende 9 des Innen-Kanals 10 ist verschlossen. Ist der Innen-Kanal 10 sowohl bezogen auf das Innen-Rohr 2 als auch auf das Außen-Rohr 3 dicht, so sinkt der durch das Manometer 19 gemessene Druck. Nach Erreichen eines vorgegebenen Unterdrucks wird der Schieber 15 geschlossen. Bei einem dichten Verbund-Rohr 1 ändert sich der durch das Manometer 19 gemessene Druck nun nicht mehr, so dass auch kleine Undichtheiten ausgeschlossen werden können. Nach dem Ende des Prüfvorganges wird die Leitung 16 durch den Entlüftungs-Schieber 17 be- oder entlüftet, die Muffe 20 und der Stopfen 22 werden von dem Verbund-Rohr 1 entfernt und das geprüfte Verbund-Rohr 1 wird als "dicht" klassifiziert.

Besitzt das Verbund-Rohr 1 größere Undichtheiten, so fällt der vom Manometer 19 gemessene Druck nach dem Anlegen des Unterdrucks auf das zu prüfende Verbund-Rohr 1 nicht oder nur geringfügig ab, da an der Undichtheits-Stellee ständig Luft einströmt. In diesem Fall kann das zu prüfende Verbund-Rohr 1 sofort als "undicht" klassifiziert werden. Im Fall kleinerer Undichtheiten wird ein vorgegebener Unterdruck im Innen-Kanal 10 erzeugt, der Schieber 15 geschlossen und abgewartet, ob der vom Manometer 19 gemessene Druck konstant bleibt. Steigt dieser durch Luft, die durch die Undichtheits-Stelle einströmt, langsam an, so wird das Verbund-Rohr 1 ebenfalls als "undicht" klassifiziert und die Muffe 20 und der Stopfen 22 entfernt.

Allgemein gesprochen wird durch die Pumpe 12 eine Druckdifferenz Δp(t) zwischen dem Innen-Kanal 10 und der Umgebung erzeugt. Die Entwicklung der Druckdifferenz Δp(t) wird durch das Manometer 19 gemessen. Es wird verglichen, ob der Verlauf der Druckdifferenz Δp(t) einem Soll-Wert Δp_{SOLL}(t) eines dichten Verbund-Rohrs entspricht oder nicht. Entsprechend wird das zu prüfende Verbund-Rohr als "dicht" oder als "undicht" klassifiziert. Dieser Vergleich kann auch automatisch durch eine mit der Druck-Mess-Einrichtung in datenübertragender Weise verbundene Daten-Verarbeitungs-Einrichtung durchgeführt werden. Es ist grundsätzlich möglich, das Prüfverfahren auch mit in der Pumpe 12 erzeugtem Überdruck durchzuführen. Es kommt lediglich auf die Druckdifferenz zwischen dem Innen-Kanal 10 und der Umgebung an. Darüber hinaus ist es nicht zwingend erforderlich, den Innen-Kanal 10 im Bereich des Endes 9 zu verschließen. Dort könnte auch eine zweite, der Pumpe 12 entsprechende Pumpe angebracht sein.

Im Folgenden werden weitere Verbund-Rohr-Typen beschrieben, die mit der Vorrichtung 11 und dem zugehörigen Verfahren ebenfalls auf Dichtheit geprüft werden können.

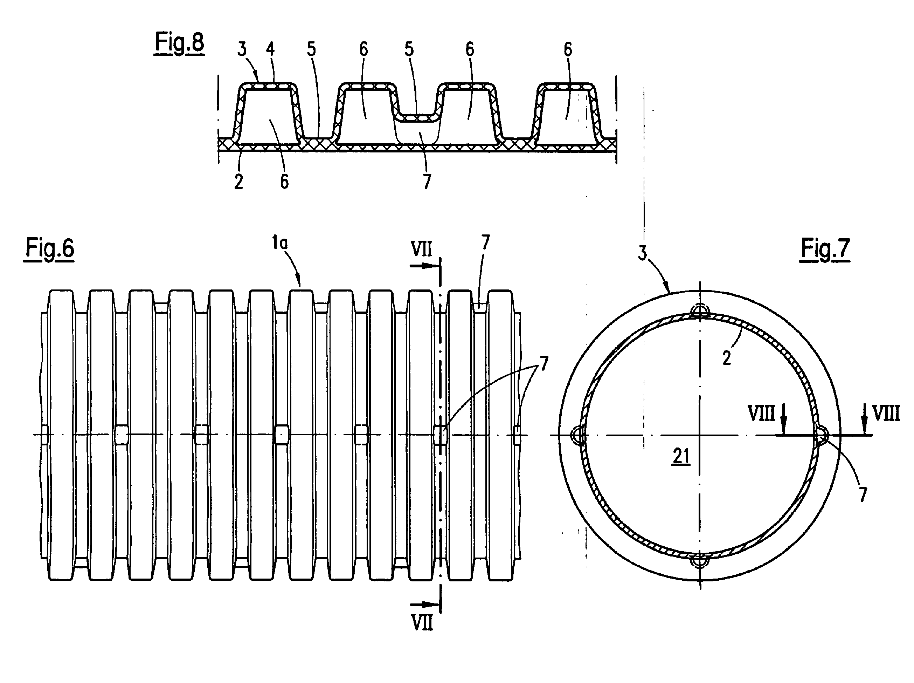

Bei dem in den Fig. 6 bis 8 dargestellten zweiten Ausführungsbeispiel erhalten konstruktiv identische Teile dieselben Bezugszeichen wie beim ersten Ausführungsbeispiel. Konstruktiv unterschiedliche, jedoch funktionell gleichartige Teile erhalten dieselben Bezugszeichen mit einem nachgestellten a. Der wesentliche Unterschied gegenüber dem ersten Ausführungsbeispiel besteht darin, dass die Verbindungs-Kanäle 7 nicht alle fluchten, sondern jeweils unmittelbar benachbarte Verbindungs-Kanäle 7 um 90° gegeneinander versetzt sind und dies jeweils in dieselbe Winkelrichtung, so dass jeweils jeder vierte Verbindungs-Kanal 7 miteinander fluchtet.

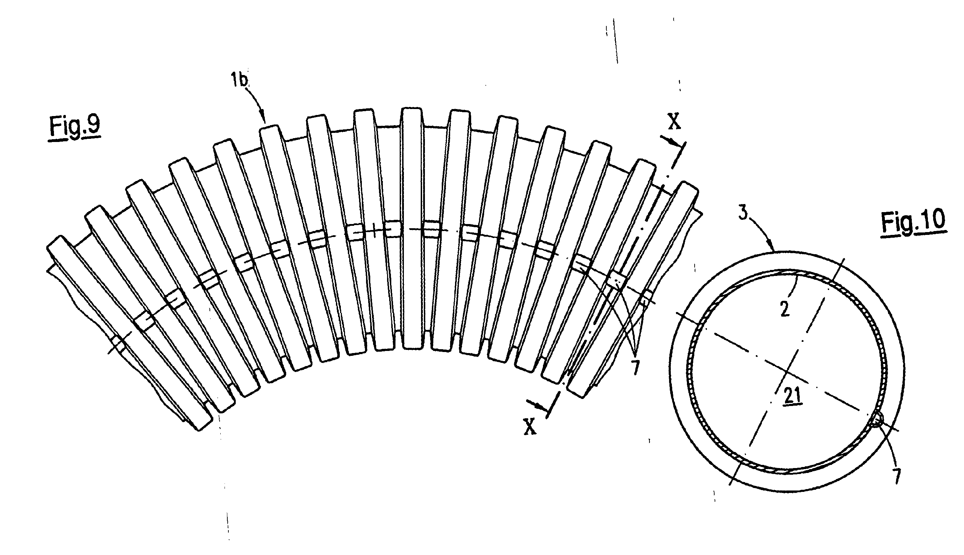

Die Fig. 9 bis 10 zeigen ein drittes Ausführungsbeispiel, wobei identische Teile dieselben Bezugszeichen wie beim ersten Ausführungsbeispiel und für gleichwirkende, aber konstruktiv unterschiedliche Merkmale dieselben Bezugszeichen mit einem nachgestellten b verwendet werden. Wie beim ersten Ausführungsbeispiel fluchten alle Verbindungs-Kanäle 7 miteinander. Die gekrümmte Darstellung des Verbund-Rohres 1 stellt klar, dass es sich bei diesem um ein flexibles oder fest gekrümmtes Verbund-Rohr 1b handeln kann.

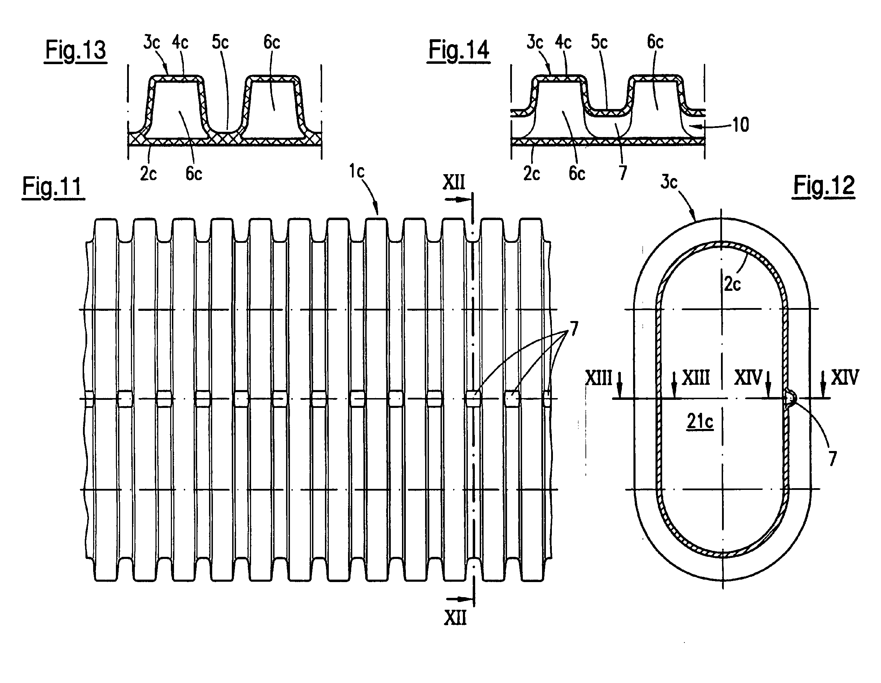

Im Folgenden wird unter Bezugnahme auf die Fig. 11 bis 14 ein viertes Ausführungsbeispiel der Erfindung beschrieben. Gleiche Teile erhalten dieselben Bezugszeichen wie beim ersten Ausführungsbeispiel. Konstruktiv unterschiedliche, jedoch funktionell gleichartige Teile erhalten dieselben Bezugszeichen mit einem nachgestellten c. Der wesentliche Unterschied gegenüber dem ersten Ausführungsbeispiel besteht darin, dass das Verbund-Rohr 1c einen ovalen Querschnitt besitzt. Eine Vorrichtung zur Fertigung von ovalen Verbund-Rohren ist beispielsweise aus der DE 10 2006 048 512.2 vom 13.10.2006 bekannt. Hinsichtlich der Anordnung der Verbindungs Kanäle 7 ist das Verbund-Rohr 1c wie das Verbund-Rohr 1 aufgebaut. Lediglich der Querschnitt ist - wie aus Fig. 12 ersichtlich - oval.

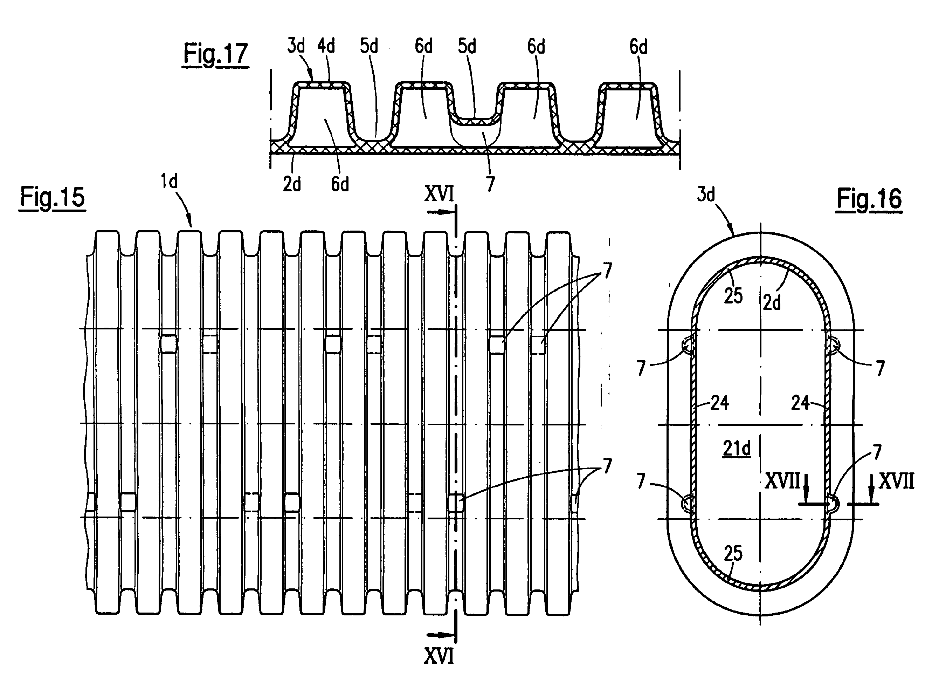

Im Folgenden wird unter Bezugnahme auf die Fig. 15 bis 17 ein Verbund-Rohr gemäß einem fünften Ausführungsbeispiel beschrieben. Identische Teile erhalten dieselben Bezugszeichen wie beim ersten Ausführungsbeispiel. Konstruktiv unterschiedliche, jedoch funktionell gleichartige Teile erhalten dieselben Bezugszeichen mit einem nachgestellten d. Wie bei dem vierten Ausführungsbeispiel besitzt das Verbund-Rohr 1d einen ovalen Querschnitt. Die unmittelbar benachbarten Verbindungs-Kanäle sind wie bei dem Verbund-Rohr 1a jeweils gegeneinander in dieselbe Winkelrichtung versetzt, so dass jeweils alle vierten Verbindungs-Kanäle 7 miteinander fluchten. Die Verbindungs-Kanäle 7 befinden sich an den jeweiligen Enden der geraden Längsabschnitte 24 vor dem Beginn der Kreisbogenabschnitte 25, die gemeinsam den ovalen Querschnitt bilden.

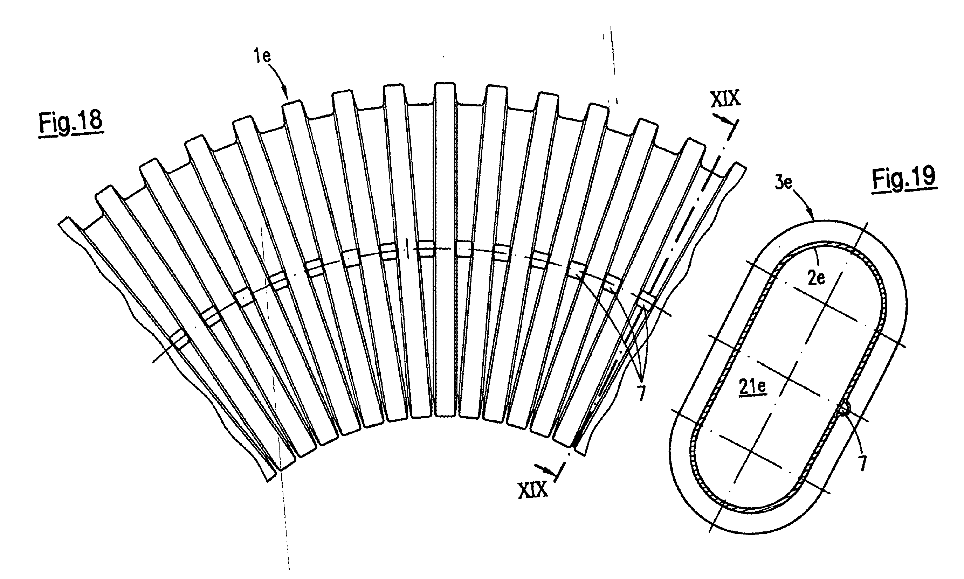

Unter Bezugnahme auf die Fig. 18 und 19 wird ein sechstes Ausführungsbeispiel der Erfindung beschrieben. Konstruktiv identische Teile erhalten dieselben Bezugszeichen wie beim ersten Ausführungsbeispiel. Konstruktiv unterschiedliche, jedoch funktionell gleichartige Teile erhalten dieselben Bezugszeichen mit einem nachgestellten e. Das Verbund-Rohr 1e weist wie die Verbund-Rohre 1c und 1d einen ovalen Querschnitt auf. In Bezug auf die Krümmung des Verbund-Rohres entspricht es dem Verbund-Rohr 1b. Das Verbund-Rohr 1e mit ovalem Querschnitt kann flexibel oder fest gekrümmt ausgebildet sein.

## Patentansprüche

1. Verfahren zur Erzeugung auf Dichtheit geprüfter Verbund-Rohre umfassend die folgenden Schritte:
a. Bereitstellen eines Verbund-Rohres (1; ... ; 1e)
i. mit einem glattwandigen Innen-Rohr (2; 2c; 2d; 2e),
ii. mit einem gewellten Außen-Rohr (3; 3c; 3d; 3e) mit ringzylindrischen Wellenbergen (4; 4c; 4d) und mit dem Innen-Rohr (2; 2c; 2d; 2e) verbundenen Wellentälern (5; 5c; 5d), und
iii. mit einem ersten Ende (9) und einem zweiten Ende (8),
iv. wobei zwischen dem Innen-Rohr (2; 2c; 2d; 2e) und den Wellenbergen (4; 4c; 4d) Ring-Räume (6; 6c; 6d) gebildet sind, und
v. wobei jeweils benachbarte Ring-Räume (6; 6c; 6d) durch mindestens einen Verbindungs-Kanal (7) unter Bildung eines vom ersten Ende (9) bis zum zweiten Ende (8) durchgehend verlaufenden Innen-Kanals (10) miteinander verbunden sind,
b. Erzeugen einer Druckdifferenz Δp(t) zwischen dem Innen-Kanal (10) und der Umgebung mittels einer Druck-/Unterdruck-Erzeugungs-Einrichtung (12),
c. Messen der Druckdifferenz Δp(t) durch eine Druck-Mess-Einrichtung (19),
d. Vergleichen der Druckdifferenz Δp(t) mit einer einem dichten Verbund-Rohr entsprechenden Soll-Druckdifferenz Δp_{SOLL}(t).

2. Verfahren nach Anspruch 1, **dadurch gekennzeichnet, dass** die Druck-/Unterdruck-Erzeugungs-Einrichtung (12) nach der Erzeugung einer Druckdifferenz Δp(t) vom Innen-Kanal (10) getrennt wird.

3. Verfahren gemäß Anspruch 2, **dadurch gekennzeichnet, dass** durch die Druck-Mess-Einrichtung (19) ermittelt wird, ob eine im Innen-Kanal (10) eingestellte Druckdifferenz Δp(t) konstant bleibt oder sich ändert.

4. Verfahren gemäß einem der vorangehenden Ansprüche, **dadurch gekennzeichnet, dass** nach dem Prüfen der Dichtheit des Verbund-Rohres (1) der Innen-Kanal (10) be- bzw. entlüftet wird.

5. Vorrichtung zur Erzeugung auf Dichtheit geprüfter Verbund-Rohre umfassend
a. mindestens ein Verbund-Rohr (1; ... ; 1e)
i. mit einem glattwandigen Innen-Rohr (2; 2c; 2d; 2e),
ii. mit einem gewellten Außen-Rohr (3; 3c; 3d; 3e) mit ringzylindrischen Wellenbergen (4; 4c; 4d) und mit dem Innen-Rohr (2; 2c; 2d; 2e) verbundenen Wellentälern (5; 5c; 5d), und
iii. mit einem ersten Ende (9) und einem zweiten Ende (8),
iv. wobei zwischen dem Innen-Rohr (2; 2c; 2d; 2e) und den Wellenbergen (4; 4c; 4d) Ring-Räume (6; 6c; 6d) gebildet sind,
v. wobei jeweils benachbarte Ring-Räume (6; 6c; 6d) durch mindestens einen Verbindungs-Kanal (7) unter Bildung eines vom ersten Ende (9) bis zum zweiten Ende (8) durchgehend verlaufenden Innen-Kanals (10) miteinander verbunden sind, und
vi. wobei der Innen-Kanal (10) am ersten Ende (9) verschlossen ist,
b. eine Druck-/Unterdruck-Erzeugungs-Einrichtung (12), welche mit dem Innenkanal (10) am zweiten Ende (8) über eine Leitung (16) verbunden ist, und
c. eine Druck-Mess-Einrichtung (19) zur Messung einer Druckdifferenz Δp(t) zwischen dem Innen-Kanal (10) und der Umgebung.

6. Vorrichtung gemäß Anspruch 5, **dadurch gekennzeichnet, dass** der Innen-Kanal (10) am ersten Ende (9) durch einen Stopfen (22) verschlossen ist.

7. Vorrichtung gemäß Anspruch 5, **dadurch gekennzeichnet, dass** der Innenkanal (10) am ersten Ende (9) verschweißt ist.

8. Vorrichtung gemäß Anspruch 5, **dadurch gekennzeichnet, dass** die Leitung (16) über eine Muffe (20) mit dem Innenkanal (10) im Bereich des zweiten Endes (8) verbunden ist.

9. Vorrichtung gemäß Anspruch 5, **dadurch gekennzeichnet, dass** in der Leitung (16) ein Schieber (15) angeordnet ist.

10. Vorrichtung gemäß Anspruch 5, **dadurch gekennzeichnet, dass** in der Leitung (16) ein Be-/Entlüftungs-Schieber (17) angeordnet ist.

## Claims

1. Method for the production of leak-tested compound pipes, the method comprising the following steps:
a. providing a compound pipe (1; ... ; 1e) comprising
i. a smooth internal pipe (2; 2c; 2d; 2e);
ii. a corrugated external pipe (3; 3c; 3d; 3e) with annular cylindrical elevations (4; 4c; 4d) and troughs (5; 5c; 5d) connected with the internal pipe (2; 2c; 2d; 2e); and
iii. a first end (9) and a second end (8),
iv. with annular spaces (6; 6c; 6d) being formed between the internal pipe (2; 2c; 2d; 2e) and the elevations (4; 4c; 4d); and
v. with in each case adjacent annular spaces (6; 6c; 6d) being interconnected by at least one connection channel (7) so that an internal channel (10) is formed which continuously extends from the first end (9) up to the second end (8);
b. generating a pressure difference Δp(t) between the internal channel (10) and the surroundings by means of a pressure / low-pressure generation unit (12);
c. measuring the pressure difference Δp(t) using a pressure measuring device (19);
d. comparing the pressure difference Δp(t) with a desired pressure difference Δp_{SOLL}(t) corresponding to a leak-tight compound pipe.

2. Method according to claim 1, **characterized in that** the pressure / low-pressure generation unit (12) is separated from the internal channel (10) after the generation of a pressure difference Δp(t).

3. Method according to claim 2, **characterized in that** the pressure measuring device (19) is used to detect whether a pressure difference Δp(t) set up in the internal channel (10) remains constant or changes.

4. Method according to one of the preceding claims, **characterized in that** after leak-testing the compound pipe (1), the internal channel (10) is ventilated or exhausted, respectively.

5. Apparatus for the generation of leak-tested compound pipes, the apparatus comprising
a. at least one compound pipe (1; ...; 1e) comprising
i. a smooth internal pipe (2; 2c; 2d; 2e);
ii. a corrugated external pipe (3; 3c; 3d; 3e) with annular cylindrical elevations (4; 4c; 4d) and troughs (5; 5c; 5d) connected with the internal pipe (2; 2c; 2d; 2e); and
iii. a first end (9) and a second end (8),
iv. with annular spaces (6; 6c; 6d) being formed between the internal pipe (2; 2c; 2d; 2e) and the elevations (4; 4c; 4d);
v. with in each case adjacent annular spaces (6; 6c; 6d) being interconnected by at least one connection channel (7) so that an internal channel (10) is formed which continuously extends from the first end (9) up to the second end (8); and
vi. with the internal channel (10) being closed at the first end (9);
b. a pressure / low-pressure generation unit (12) which is connected to the second end (8) of the internal channel (10) via a line (16); and
c. a pressure measuring device (19) for measuring a pressure difference Δp(t) between the internal channel (10) and the surroundings.

6. Apparatus according to claim 5, **characterized in that** the internal channel (10) is closed by a plug (22) at the first end (9).

7. Apparatus according to claim 5, **characterized in that** the internal channel (10) is closed by welding at the first end (9).

8. Apparatus according to claim 5, **characterized in that** the line (16) is connected to the internal channel (10) in the region of the second end (8) via a socket (20).

9. Apparatus according to claim 5, **characterized in that** a slider (15) is arranged in the line (16).

10. Apparatus according to claim 5, **characterized in that** a ventilation / exhaust slider (17) is arranged in the line (16).

## Revendications

1. Procédé de réalisation de tubes combinés, contrôlés sur le plan de l'étanchéité, comportant les étapes suivantes :
a. préparation d'un tube combiné (1 ; ..., 1e),
i. avec un tube intérieur (2 ; 2c ; 2d ; 2e) à paroi lisse,
ii. avec un tube extérieur (3 ; 3c ; 3d ; 3e) ondulé avec des sommets d'ondulation cylindriques annulaires (4 ; 4c ; 4d) et avec des creux d'ondulation (5 ; 5c ; 5d) reliés au tube intérieur (2 ; 2c ; 2d ; 2e), et
iii. avec une première extrémité (9) et une deuxième extrémité (8),
iv. sachant qu'entre le tube intérieur (2 ; 2c ; 2d ; 2e) et les sommets d'ondulation cylindriques annulaires (4 ; 4c ; 4d) sont formés des espaces annulaires (6 ; 6c ; 6d), et
v. des espaces annulaires (6 ; 6c ; 6d) respectivement adjacents étant reliés l'un à l'autre par au moins un conduit de liaison (7) moyennant la formation d'un conduit intérieur (10) qui s'étend depuis la première extrémité (9) jusqu'à la deuxième extrémité (8),
b. réalisation d'une différence de pression Δp(t) entre le conduit intérieur (10) et l'environnement au moyen d'un dispositif (12) de production de pression/dépression,
c. mesure de la différence de pression Δp(t) par un dispositif de mesure de la pression (19),
d. comparaison de la différence de pression Δp(t) avec une différence de pression théorique Δp_{SOLL}(t) correspondant à celle d'un tube combiné étanche.

2. Procédé selon la revendication 1, **caractérisé en ce que** le dispositif (12) de production de pression/dépression est détaché du conduit intérieur (10) après la production de la différence de pression Δp(t).

3. Procédé selon la revendication 2, **caractérisé en ce que** par le dispositif de mesure de la pression (19), on détermine si une différence de pression Δp(t), réglée dans le conduit intérieur (10), reste constante ou varie.

4. Procédé selon l'une quelconque des revendications précédentes, **caractérisé en ce que**, après le contrôle de l'étanchéité du tube combiné (1), l'air est admis dans le conduit intérieur (10) ou est purgé hors de celui-ci.

5. Dispositif de réalisation de tubes combinés, contrôlés sur le plan de l'étanchéité, comportant
a. au moins un tube combiné (1 ; ..., 1e),
i. avec un tube intérieur (2 ; 2c ; 2d ; 2e) à paroi lisse,
ii. avec un tube extérieur (3 ; 3c ; 3d ; 3e) ondulé avec des sommets d'ondulation cylindriques annulaires (4 ; 4c ; 4d) et avec des creux d'ondulation (5 ; 5c ; 5d) reliés au tube intérieur (2 ; 2c ; 2d ; 2e), et
iii. avec une première extrémité (9) et une deuxième extrémité (8),
iv. sachant qu'entre le tube intérieur (2 ; 2c ; 2d ; 2e) et les sommets d'ondulation cylindriques annulaires (4 ; 4c ; 4d) sont formés des espaces annulaires (6 ; 6c ; 6d), et
v. des espaces annulaires (6 ; 6c ; 6d) respectivement adjacents étant reliés l'un à l'autre par au moins un conduit de liaison (7) moyennant la formation d'un conduit intérieur (10) qui s'étend depuis la première extrémité (9) jusqu'à la deuxième extrémité (8),
vi. le conduit intérieur (10) étant raccordé à la première extrémité (9),
b. un dispositif (12) de production de pression/dépression, qui est relié via une conduite (16) avec le conduit intérieur (10) au niveau de la deuxième extrémité (8), et
c. un dispositif de mesure de la pression (19) pour mesurer une différence de pression Δp(t) entre le conduit intérieur (10) et l'environnement.

6. Dispositif selon la revendication 5, **caractérisé en ce que** le conduit intérieur (10) est fermé au niveau de la première extrémité (9) par un bouchon (22).

7. Dispositif selon la revendication 5, **caractérisé en ce que** le conduit intérieur (10) est soudé au niveau de la première extrémité (9).

8. Dispositif selon la revendication 5, **caractérisé en ce que** la conduite (16) est reliée, par l'intermédiaire d'un manchon (20), au conduit intérieur (10) dans la zone de la deuxième extrémité (8).

9. Dispositif selon la revendication 5, **caractérisé en ce qu'**un robinet-vanne (15) est agencé dans la conduite (16).

10. Dispositif selon la revendication 5, **caractérisé en ce que** dans la conduite (16) est agencé un robinet-vanne d'admission d'air et de purge d'air (17).
